# EUROPEAN PATENT APPLICATION

(11) **EP 3 029 354 A1**
(43) Date of publication of application: **08.06.2016**
(21) Application number: 15198110.7
(22) Date of filing: 04.12.2015
(51) Int. Cl.: F16H 1/28, F16D 7/08, B25D 16/00

(54) **PLANETARY GEAR SYSTEM**

(30) Priority: 04.12.2014 GB 201421579
(71) Applicant: Black & Decker, Inc., Newark, DE 19711 (US)
(72) Inventor: Rompel, Markus, 65594 Runkel / Schadeck (DE); Gottschling, Rafael, 65618 Selters-Eisenbach (DE)
(74) Representative: Bell, Ian Stephen

(57) **Abstract**

A planetary gear system comprising: a sun gear (78) forming a first part; a ring gear (70) co-axial with the sun gear (78) forming a second part; at least one planetary gear (94) which meshes with both the sun gear (78) and the ring gear (70) forming a third part; a planetary gear carrier (84) which rotationally supports the at least one planetary gear (94) forming a fourth part; wherein the there is provided a torque clutch which is supported by and connects directly between two of the parts; wherein the torque clutch prevents relative rotation of the two parts below a predetermine torque value and allows relative rotation of the two parts above the predetermined value.

## Description

The present invention relates to a planetary gear system with a torque clutch.

A hammer drill comprises a tool holder in which a cutting tool, such as a drill bit, can be supported and driven by the hammer drill. The hammer drill can often drive the cutting tool in three different ways, each being referred to as a mode of operation. The cutting tool can be driven in a hammer only mode, a rotary only mode and a combined hammer and rotary mode. A hammer drill will typically comprise an electric motor and a transmission mechanism by which the rotary output of the electric motor can either rotationally drive the cutting tool to perform the rotary only mode or repetitively strike the end of a cutting tool to impart axial impacts onto the cutting tool to perform the hammer only mode or rotationally drive and repetitively strike the cutting tool to perform the combined hammer and rotary mode.

EP1674207 describes an example of such a hammer drill.

An impact driver comprises a tool holder in which a tool, such as a screw driver bit, can be supported and rotationally driven by the impact driver. The impact driver comprises a tangential impact mechanism which is activated when a large torque is experienced by the tool. The tangential impact mechanism imparts tangential (circumferential or rotational) impacts onto the tool until the torque applied to the tool drops below a predetermined value.

US2005/0173139 describes an example of such an impact driver.

It is known to provide hammer drills with an additional tangential impact mechanism so that the hammer drill can impart rotational impacts onto a cutting tool in addition to axial impacts. US7861797, WO2012/144500 and DE1602006 all disclose such hammer drills. However, in each of these hammer drills the additional tangential impact mechanism is rotationally driven at a same rate as the rate of rotation of the output spindle.

The object of the present invention is to provide an improved planetary gear system which can be utilized in **a** hammer drill with an additional tangential impact mechanism to provide an improved operational performance. However, it will be appreciated that the use of such an improved planetary gear system is not limited to a hammer drill or even a power tool but could be used in wide range of types of machinery.

Accordingly, there is provided a planetary gear system in accordance with claim 1.

By providing a torque clutch which forms an integral part of a planetary gear system and which is directly connected between and supported by two component parts of the planetary system only, it provides a compact planetary gear system which requires no interaction of the torque clutch with any component part of the power tool (or other type of machinery) in which the planetary gear system is mounted. Furthermore, it enables the planetary gear system with an overload clutch to be constructed as a single stand alone component as the torque clutch does not the need to have any interaction with other component parts of a power tool (or other type of machinery) in which it is mounted in order for the torque clutch to operate.

Two embodiments of the present invention will now be described with reference to accompanying drawings of which:
Figure 1 shows a side view of a hammer drill with an additional tangential impact mechanism in accordance with a first embodiment of the present invention;
Figure 2 shows a vertical cross section of the rotary drive, the hammer mechanism and the tangential impact mechanism of the hammer drill shown in Figure 1;
Figure 3 shows a horizontal cross section of the rotary drive, the hammer mechanism and the tangential impact mechanism of the hammer drill in the direction of Arrows B in Figure 2;
Figure 4 shows a vertical cross section of the spindle and the tangential impact mechanism of the hammer drill in the direction of Arrows C in Figure 2;
Figure 5 shows a horizontal cross section of the rotary drive, the hammer mechanism and the tangential impact mechanism of the hammer drill in the direction of Arrows D in Figure 2;
Figure 6 shows a vertical cross section of the planetary gear mechanism of the hammer drill in the direction of Arrows E in Figure 2;
Figure 7 shows a sketch of the spindle, sleeve with the V shaped grooves, the anvil, the U shaped recesses and the interconnecting ball bearings; and
Figure 8 shows a schematic diagram of a planetary gear system with a torque clutch constructed as a single component according to a second embodiment of the present invention.

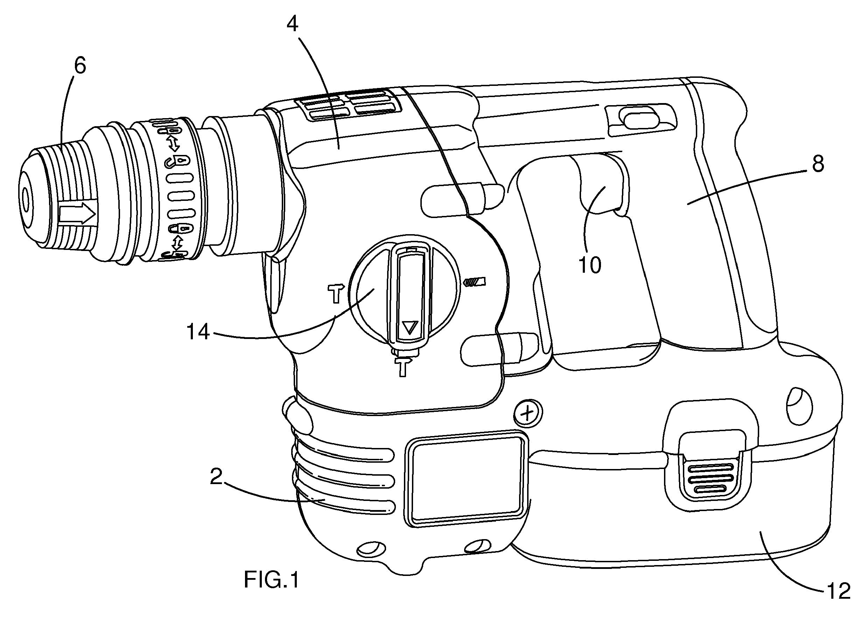

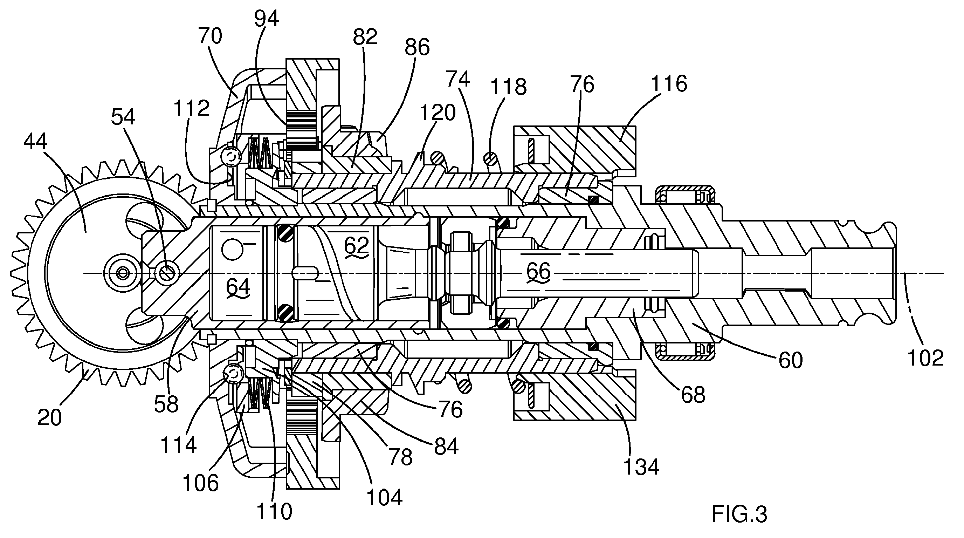

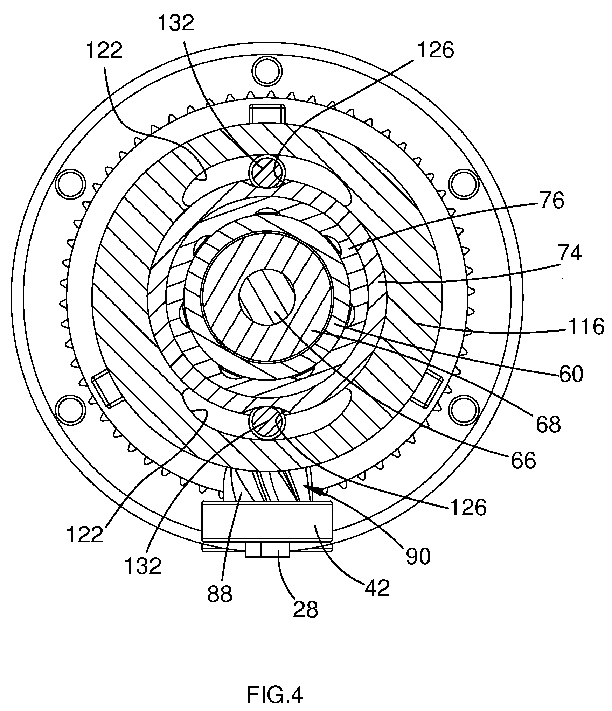

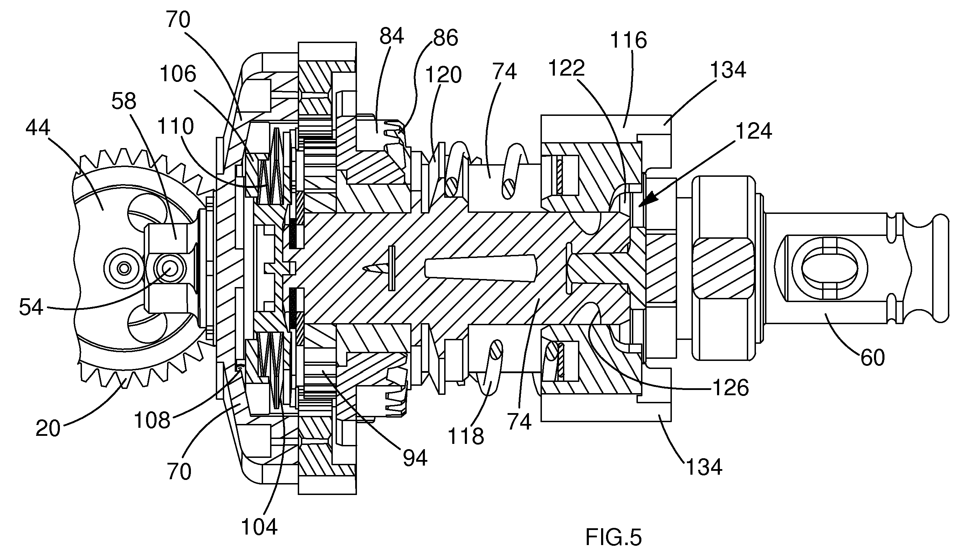

A first embodiment of the present invention will now be described with reference to Figures 1 to 7.

Referring to Figure 1, the hammer drill comprises a motor housing 2 in which is located an electric motor 100 and a transmission housing 4 in which is located a hammer mechanism (which is described in more detail below) to impart axial impacts onto a cutting tool, a rotary drive (which is described in more detail below) to rotationally drive a cutting tool and a tangential (rotational) impact mechanism (which is described in more detail below) to impart tangential impacts to a cutting tool. A tool holder 6 is attached to the front of the transmission housing 4 which is capable of supporting a cutting tool to be driven by the hammer drill. A handle 8 is attached at one end to the motor housing 2 and at the other end to the transmission housing 4. A trigger button 10 is mounted within the handle 8 which is used by the operator to activate the electric motor 100. A battery pack 12 is attached to the base of the handle 8 which provides electrical power to the motor 100. A mode change knob 14 is mounted on the side of the transmission housing 2. The knob 14 can be rotated to three different positions to change the mode of operation of the hammer drill between hammer only mode, rotary only mode and combined rotary and hammer mode.

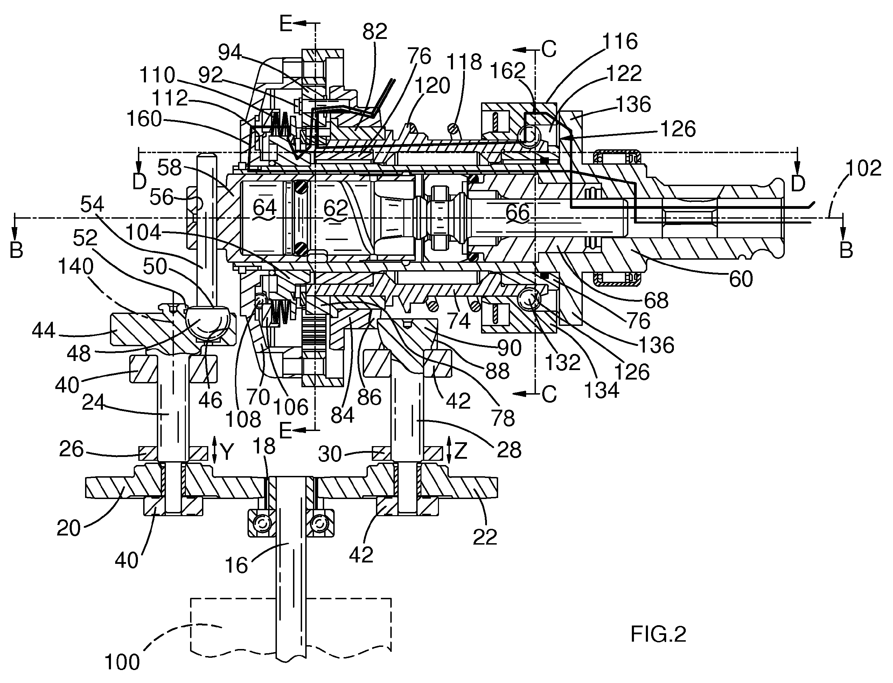

Referring to Figure 2, the motor 100 has a drive spindle 16 with teeth 18 which mesh with two gears 20, 22.

The first gear 20 is capable of being drivingly connected to a first shaft 24 (which is rotationally mounted within the transmission housing 2 by bearings 40) via a first sleeve 26. The first sleeve 26 can axially slide in the direction of Arrow Y along the first shaft 24 but is rotationally fixed to the first shaft 24. The first gear 20 can freely rotate on the first shaft 24. The side of the first sleeve 26 comprises teeth (not shown) which can engage with teeth (not shown) formed on the side of the first gear 20 when the first sleeve 26 is moved into engagement with the first gear 24 to drivingly connect the first sleeve 26 with the first gear 20. When the first sleeve 26 is drivingly engaged with the first gear 20, the rotational movement of the first gear 20 is transferred to the first shaft 24.

The second gear 22 is capable of being drivingly connected to a second shaft 28 (which is rotationally mounted within the transmission housing 2 by bearings 42) via a second sleeve 30. The second sleeve 30 can axially slide in the direction of Arrow Z along the second shaft 28 but is rotationally fixed to the second shaft 28. The second gear 22 can freely rotate on the second shaft 28. The side of the second sleeve 30 comprises teeth (not shown) which can engage with teeth (not shown) formed on the side of the second gear 22 when the second sleeve 30 is moved into engagement with the second gear 22 to drivingly connect the second sleeve 30 with the second gear 22. When the second sleeve 30 is drivingly engaged with the second gear 22, the rotational movement of the second gear 22 is transferred to the second shaft 28.

The movement of the two sleeves 26, 30 is controlled by a mode change mechanism, designs of which are well known in art. For example, the sleeves 26, 30 can be moved by a see-saw arrangement similar to that described in EP1674207. By moving the first sleeve 26 only into engagement with the first gear 20, the second sleeve 30 only into engagement with the second gear 22, or both sleeves 26, 30 into engagement with their respective gears 20, 22, the mode of operation of the hammer drill can be changed between hammer only mode, rotary only mode and combined rotary and hammer mode respectively. The mode change mechanism is controlled by rotation of the mode change knob 14. As the mode change mechanism does not form part any part of the present invention, it will not be described in any more detail.

Rigidly attached to the top of the first shaft 24 is a crank plate 44. A recess 46 is formed within the crank plate 44 in which is located a part spherical ball 48. The part spherical ball 48 can pivot over a range of angles within the recess 46. The part spherical ball 48 is prevented from exiting the recess 46 by a shoulder 50 engaging with a lip 52 formed on the crank plate 44. A drive shaft 54 is rigidly connected to and extends from the part spherical ball 48. The shaft 54 passes through and is capable of axially sliding within a tubular passage 56 formed in the rear of a hollow piston 58 which is mounted within the rear end of a hollow output spindle 60. Rotation of the crank plate 44 results in a reciprocating movement of the hollow piston 58 within the hollow output spindle 60.

A ram 62 is mounted within the hollow piston 58 which is reciprocatingly driven by the reciprocating piston 58 via an air spring 64. The ram 62 repetitively strikes a beat piece 66 mounted within a beat piece support structure 68 inside of the hollow spindle 60, which in turn repetitively strikes an end of a cutting tool held by the tool holder 6 inside the front end of the hollow spindle 60.

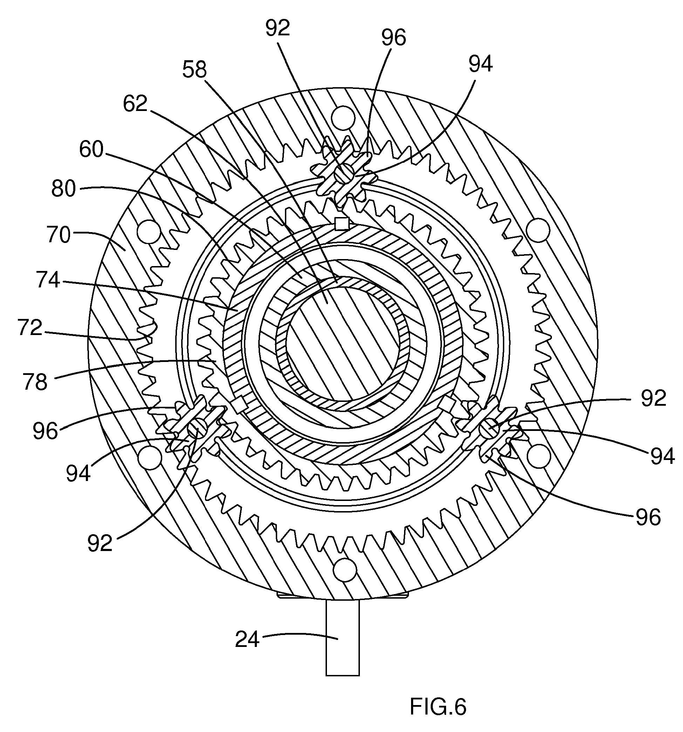

Mounted on the rear part of the hollow output spindle 60 in a rigid manner is a cup shaped gear 70 with teeth 72 formed on an inner wall facing inwardly towards the hollow spindle 60 as best seen in Figure 6. Rotation of the hollow spindle 60 about its longitudinal axis 102 results in rotation of the cup shaped gear 70 and vice versa.

Rotationally mounted on the hollow spindle 60 via bearings 76 is a sleeve 74. The sleeve 74 is axially fixed relative to the hollow spindle 60. The rear end of the sleeve 74 extends inside of the cup shaped gear 70. An annular shaped gear 78 is rigidly mounted on the rear end of the sleeve 74 inside of the cup shaped gear 70 which has teeth 80 which face away radially outwardly from the hollow spindle 60 towards the teeth 72 of the cup shaped gear 70. Rotation of the sleeve 74 results in rotation of the annular shaped gear 78 and vice versa.

Mounted on the sleeve 74 is a sliding bearing 82. Mounted on the sliding bearing 82 in a freely rotatable manner is a ring shaped first bevel gear 84. The first bevel gear 84 is capable of freely rotating around the sleeve 74 on the slide bearing 82 but is axially fixed relative to the sleeve 74. The first bevel gear 84 comprises teeth 86 which mesh with teeth 88 of a second bevel gear 90 rigidly attached to the second shaft 28. Rotation of the second shaft 22 results in rotation of the second bevel gear 90 which in turn rotates the first bevel gear 84 on the slide bearing 82 around the sleeve 74.

Attached to the side of the first bevel gear 84 in angular positions of 120 degrees relative to each other are three pins 92. The pins 92 extend rearwardly in parallel to the longitudinal axis 102 of the hollow spindle 60 and to each other into the inside of the cup shape gear 70. Mounted on each pin 92 in a freely rotatable manner is a circular gear 94 with teeth 96. The teeth 96 of all three circular gears 94 mesh with both the teeth 72 of the cup shaped gear 70 and the teeth 80 of the annular shaped gear 78. The three circular gears 94, the cup shaped gear 70, the annular shaped gear 78 and the first bevel gear 84 form a planetary gear system with the three circular gears 94 forming the planetary gears, the cup shaped gear 70 forming a ring gear, the annular shaped gear 78 forming the sun gear and the first bevel gear 84 forming the carrier for the planetary gears 94.

Rigidly attached to the rear of the sleeve 74 is a clutch sleeve 104. Mounted on the clutch sleeve 104 is a ring shaped ball bearing cage 106 which holds a number of ball bearings 108 in preset positions within the ball bearing cage 106 but in a freely rotatable manner. The ball bearing cage 106 can axially slide on the clutch sleeve 104 but is rotationally fixed to the clutch sleeve 104. Sandwiched between the clutch sleeve 104 and ball bearing cage 106 are four bevel washers 110 which act as a spring, urging the ball baring cage 106 rearwardly towards a side wall 112 of the cup shaped gear 70. Formed within the side wall 112 around the axis 102 of the hollow spindle 60 is a groove (not shown) which acts as a path for the ball bearings 108. Formed along the path are a number of indentions 114 corresponding to the number and relative positions of the ball bearings 108. The ball bearings 108 are held within the path and indentations by the ball bearing cage 106 which presses them against the wall 112 due to the biasing force of the bevel washers 110. The clutch sleeve 104, the bevel washers 110, the ball bearing cage 106, the ball bearings 108 and the path with the indentations 114 within the wall 112 of the cup shaped gear 70 form a torque clutch.

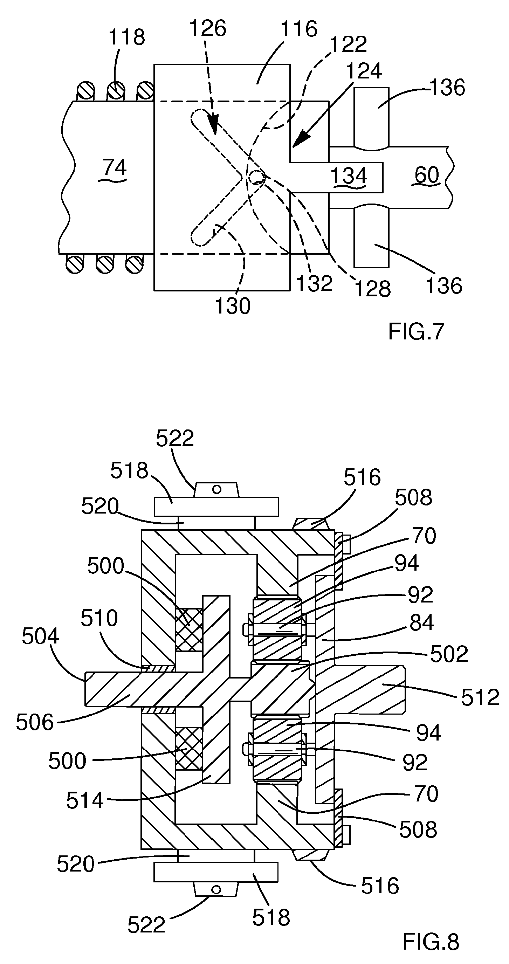

Mounted on the sleeve 74 is an anvil 116. The anvil 116 can axially slide along the sleeve 74 or rotate around the sleeve 74. Formed on the inside of the anvil 116, on opposite sides of the sleeve 74 in a symmetrical manner, are two U shaped recesses 122 (shown as dashed lines in Figure 7) of the same dimensions, the entrances 124 of which face forward. The height of the U shaped recess 122 is constant across the length and width of the U shaped recess 122. Formed on the outside of the sleeve 74, on opposite sides of the sleeve 74 in a symmetrical manner, are two V shaped grooves 126, the apexes 128 of which point forward. Each arm 130 of each of the V shaped grooves 126 extends both around the sleeve 74 and rearwardly (left in Figure 2) along the sleeve 74 in a spiral manner, the arms 130 of each V shaped groove 126 being symmetrical with the other arm 130 of the same V shaped groove 126. The anvil is mounted on the sleeve 74 so that each U shaped recess 122 locates above and faces towards a V shaped groove 126. A ball bearing 132 locates in each V shaped groove 126, the diameter of the two ball bearings 132 being equal. The diameter of the ball bearings 132 is greater than the depth of the V shaped grooves 126 and therefore the side of the ball bearings 132 project into the U shaped recesses 122. The diameter of the ball bearings 132 is slightly less than the depth of the V shaped grooves and height of the U shaped recesses 122 so that the ball bearings are held within the V shaped grooves 126 by an inner wall of the U shaped recesses 122.

A helical spring 118 is sandwiched between the anvil 116 and a shoulder 120 formed on the sleeve 74 to urge the anvil 118 in a forward (right in Figure 2) direction. When the anvil 116 is urged forward, the ball bearings 132 engage with the rear walls of the U shaped recesses 122 and are then urged forward. As the ball bearing 132 are moved forward, they move along an arm 130 of a V shaped groove 126 until they reach the apex 128. The apex 130 of the V shaped grooves prevents any further forward movement of the ball bearings132. The ball bearings132 in turn prevent any further forward movement of the anvil 116. The ball bearings 132, V shaped grooves 126 and U shaped recesses 122 together with the spring 118 form a cam system by which the relative axial position of the anvil 116 on the sleeve 74 is controlled as the anvil 116 rotates relative to the sleeve 74.

Formed on the front of the anvil 116, on opposite sides of the anvil 116, in a symmetrical manner are two protrusions 134 which extend in a forward direction (right in Figure 2) parallel to the longitudinal axis 102 of the spindle 60. Formed on opposite sides of the spindle 60 in a symmetrical manner are two impact arms 136 which extend perpendicularly to the longitudinal axis 102 of the spindle 60 away from the spindle 60 in opposite directions. When the ball bearings 132 are located at the apex of the V shaped grooves 126, resulting in the anvil 116 being in its most forward position, the two protrusions 134 extend in a forward direction past the two impact arms 136. The length of the impact arms136 is such that if the spindle 60 rotates relative to the sleeve 74 (with the anvil 116 which is mounted on and connected to the sleeve 74 via the cam system) and the anvil 116 is in its most forward position, the side surfaces of the impact arms 136 would engage with the side surfaces of the protrusions 134 and prevent any further rotation of the anvil 116.

The spring 118, anvil 116, sleeve 74, V shaped grooves 126, the ball bearings 132, the U shaped recesses 122, and protrusions 134 form a tangential impact mechanism which imparts tangential strikes onto the side surfaces of the impact arms 136 of the spindle 60.

The operation of the hammer drill will now be described.

In order to operate the hammer drill in hammer only mode, the first sleeve 26 is moved into driving engagement with the first gear 20 (downwards in Figure 2) whilst the second sleeve 30 is moved out of driving engagement with the second gear 22 (upwards in Figure 2) by the mode change mechanism. As such, the rotation of the first gear 20 results in rotation of the first shaft 24 whilst the rotation of the second gear 22 is not transferred to the second shaft 28. Therefore rotation of the drive spindle 16 results in rotation of the first shaft 24 only via the first gear 20 and the first sleeve 26.

Rotation of the first shaft 24 results in rotation of the crank plate 44 which in turn results in the rotation of spherical ball 48 and the drive shaft 54 around the axis 140 of the first shaft 24. As the drive shaft 54 can only slide within the tubular passage 56 of the hollow piston 58 which passage 56 extends perpendicularly to the axis 102 of the spindle 60, it will always extend in a direction perpendicular to the axis 102 of the spindle 60 and therefore the whole of the drive shaft 54 moves left and right (as shown in Figure 2) in a reciprocating manner in a direction parallel to the axis 102 of the spindle 60 whilst pivoting about the axis 102 of the spindle 60 at the same time.

As the drive shaft 54 reciprocatingly moves left and right in a direction parallel to the axis of the spindle 60, it reciprocatingly moves the hollow piston 54 within the spindle 60. The reciprocating movement of the hollow piston 58 is transferred to the ram 62 via an air spring 64. The reciprocating ram 62 repetitively strikes the beat piece which in turn repetitively strikes a cutting tool held within the end of the spindle 60 by the tool holder 6.

In order to operate the hammer drill in rotary only mode, the first sleeve 26 is moved out of driving engagement with the first gear 20 (upwards in Figure 2) whilst the second sleeve 30 is moved into driving engagement with the second gear 22 (downwards in Figure 2) by the mode change mechanism. As such, rotation of the second first gear 22 results in rotation of the second shaft 28 whilst the rotation of the first gear 20 is not transferred to the first shaft 24. Therefore, rotation of the drive spindle 16 results in rotation of the second shaft 28 only via the second gear 22 and the second sleeve 30.

Rotation of the first shaft 24 results in rotation of the second bevel gear 90 which in turn results in the rotation of the first bevel gear 84 about the axis of the spindle 60. This in turn results in the three pins 92 moving sideways, perpendicularly to their longitudinal axes, around the axis 102 of the spindle 60. This in turn results in the three circular gears 94 rotating around the axis 102 of the spindle 60.

Under normal operating conditions, the amount of restive torque on the hollow spindle 60 is low and therefore is less than that of the threshold of the torque clutch. As such, the ball bearings 108 of the torque clutch remain held within the indentations 114 in path on the side wall 112 of the cup shaped gear 70 due to spring force of the bevel washers 110. Therefore, the cup shape gear 70 is held rotationally locked to the clutch sleeve 104 which in turn results in the cup shaped gear 70 being rotationally locked to the annular shaped gear 78. As such there is no relative rotation between the cup shaped gear 70 and the annular shaped gear 78. This is referred to the torque clutch "not slipping".

The circular gears 94 are drivingly engaged with both the cup shaped gear 70 and the annular shaped gear 78. Therefore, as the pins 92 rotate around the axis 102 of the spindle 60, the three circular gears 94 also rotate around the axis 102 causing both the cup shaped gear 70 and the annular shaped gear 78, which are rotationally locked to each other, also to rotate around the axis 102 in unison. As the cup shaped gear 70 and the annular shaped gear 78 are rotationally locked to each other and move in unison, the three circular gears 94 do not rotate around the pins 92 upon which they are mounted.

As such, the spindle 60, which is rigidly connected to the cup shape gear 70, also rotates around the axis 102. This in turn rotatingly drives the tool holder 6 which in turn rotatingly drives any cutting tool held the tool holder within the end of the spindle 60. The sleeve 74, which is rigidly connected to annular shape gear 78, also rotates an as the cup shaped gear 70 and the annular shaped gear 78 are rotationally locked to each other. As such, the sleeve 74 will rotate at the same rate and in the same direction as the spindle 60. As there is no relative rotation between the sleeve 74 and spindle 60, there is no movement of the anvil 116 and therefore the tangential impact mechanism will not operate. As such, there is a smooth rotary movement applied to the spindle 60. The driving force is transferred from the first bevel gear 84 to a cutting tool held within the front end of the spindle 60 via the path indicated by solid line 160. The rate of rotation of the spindle 60 versus the drive spindle 6 is determined by the gear ratios between the drive spindle 16 and the second gear 22 and the gear ratio between the second bevel gear 90 and the first bevel gear 84.

However, when the operating conditions cease to be normal and the amount of restive torque on the spindle 60 is excessive, for example during kick back where a cutting tool is prevented from further rotation within a work piece, the restive torque becomes greater than that of the threshold of the torque clutch. When the amount of restive torque on the spindle 60 is excessive, the rotation of the spindle 60 will be severely hindered or even completely stopped. However, the drive spindle 60 of the motor 10 will continue to rotate, rotationally driving the second gear 22, second shaft 28, the second bevel gear 90 and first bevel gear 84 which in turn will continue to rotationally drive the pins 92 and circular gears 94 around the axis 102 of the spindle 60. However, as rotation spindle 60 is hindered or stopped, the rotation of the cup shaped gear 70 is similarly hindered or stopped. Therefore, the torque clutch slips due to the ball bearings 108 of the torque clutch moving out of the indentations 114 in path on the side wall 112 of the cup shaped gear 70 against the spring force of the bevel washers 110 and travelling along the path, allowing the cup shape gear 70 to rotate in relation to the clutch sleeve 104. This in turn allows the annular shaped gear 78 to rotate in relation to the cup shaped gear 70. Therefore the rate of rotation of the cup shaped gear and the annular shaped gear will be different. As the circular gears 94 are meshed with the cup shaped gear 70, each of the three circular gears 94 will be caused to rotate around the pin 92 upon which they are mounted in addition to rotating around the axis 102 of the spindle 60. As the circular gears 94 rotate around the pin, they cause the annular gear 84 to rotate as it is meshed with the circular gears 94. As the cup shaped gear 70 is severely hinder or even completely stopped, there is a relative rotation between the cup shaped gear 70 and annular gear 84 and therefore a relative rotation between the sleeve 74 and spindle 60.

Because the spindle 60 is attached to the cup shaped gear 70, and the sleeve 74 is attached to the annular shape gear 84 and that the rotary drive from the motor is imparted to the planetary gear system via the circular gears 94, the direction of rotation of the sleeve 74 and spindle 60 when the torque clutch is not slipping (ie the cup shaped gear 70 and the annular shaped gear 84 are rotationally locked to each other and there is no relative rotational movement between the two) remains the same as the direction of rotation of the sleeve when the torque clutch slips (ie when there is relative rotation between the cup shaped gear 70 and the annular shaped gear 84).

As the sleeve 74 starts to rotate, the anvil 116, which is connected to the sleeve 74 via the ball bearings 132 and which is in its most forward position because the ball bearings 132 are urged to the apex 28 of the V shaped grooves 126 of the sleeve and rear walls of the U shaped recesses by the spring 118, starts to rotate with the sleeve 74. However, as the anvil rotates, the two protrusions 134 engage with the two impact arms 136 which, as they are attached to the spindle 60, are either stationary or rotating much more slowly than the sleeve 74. The anvil 116 is therefore prevented from rotating further with the sleeve 74. Therefore, as the sleeve 74 continues to rotate, the ball bearings 132 are forced to travel backwards along one of the arms 130 of the V shaped grooves 126 due to the ball bearings 132 and the V shaped grooves 126 acting a cam and cam follower to accommodate the relative rotational movement between the anvil 116 and the sleeve 74. As the ball bearings 132 move backwards and as they are engaged with the rear walls of the U shaped recesses 122, they pull the anvil 116 rearwardly (left in Figure 2) against the biasing force of the spring 118. As the anvil 116 slides rearwardly, the two protrusions 134 slide rearwardly whilst in sliding engagement with the two impact arms 136. Once the anvil has been moved rearwardly sufficiently, the two protrusions 134 disengage with the impact arms 136 and slide to the rear of the two impact arms 136. In this position, the impact arms 136 no longer hinder the rotational movement of the anvil 116. As such the anvil 116 is free to rotate. Therefore, the rotational movement of the sleeve 74 is imposed onto the anvil 116. Furthermore, as the anvil 116 is free to rotate, the spring 118 drives the anvil 116 forward, causing it to rotate on the sleeve 74 at a much faster rate than the sleeve 74 due to the ball bearings 132 travelling along the arms 130 of the V shape grooves 126 which act as cam and cam followers. As the anvil 116 moves forward and rotates, the two protrusion 134 move between and head towards the two impact arms 136. As it continues to move forward and rotate, the protrusions 134 tangentially strike impact surfaces on the sides of the two impact arms 136. As the protrusions 134 strike the two impact arms 136, they impart a tangential impact to the spindle 60. Once in engagement with the impact arms 136, the anvil 116 is prevented from further rotation relative to the spindle 60. However, the sleeve 74 continues to rotate forcing the ball bearings 132 rearwadly along the arms 130 of the V shaped slots 126 and causing the whole process to be repeated. In this manner, the tangential impact mechanism tangentially strikes the spindle 60, which in turn transfers the tangential impacts to a cutting tool held with the front end of the spindle 60.

The size and speed of the tangential impact is determined by the mass of the anvil 116, the strength of the spring 118 and the shape of V shaped grooves 126.

The tangentially impact driving force is transferred from the first bevel gear 84 to a cutting tool held within the front end of the spindle 60 via the path indicated by solid line 162. The rate of rotation of the sleeve 74 versus the drive spindle 6 is determined by the gear ratios between the drive spindle 16 and the second gear 22, the gear ratio between the second bevel gear 90 and the first bevel gear 84 and the gear ratio of the planetary gear system. This is a different ratio to that of the spindle 60 and the drive spindle 16. This provides the benefit of having the spindle 60 rotate at one optimised rate when the hammer is operating with only a smooth rotation of the hollow spindle 60 and the sleeve 74 rotate at a second optimised rate when tangential impact mechanism is operating. The sizes of the cup shaped gear 70, circular gears 94 and annular shaped gear 78 can be determined so that the gear ratios between the drive spindle 16 and the second gear 22 and between the second bevel gear 90 and the first bevel gear 84 can be optimised for driving the spindle 60 whilst the ratio of the planetary gear system optimises the rate of rotation for the sleeve 74 of the tangential impact mechanism

In order to operate the hammer drill in rotary and hammer mode, the first sleeve 26 is moved into driving engagement with the first gear 20 (downwards in Figure 2) whilst the second sleeve 30 is also moved into driving engagement with the second gear 22 (downwards in Figure 2) by the mode change mechanism. As such, rotation of the second gear 22 results in rotation of the second shaft 28 whilst the rotation of the first gear 20 results in rotation of the first shaft 24. Therefore rotation of the drive spindle 16 results in rotation of both the first and second shafts 28. The hammer mechanism and rotary mechanism then each operate as described above.

It will be appreciated that the planetary gear system with the torque clutch connected between and supported by the cup shaped gear 70 and annular shaped gear 78 could be manufactured as a single stand alone component as the torque clutch is completely contained within the planetary gear system and does not require any interaction outside of the planetary gear system with any other part of the hammer drill.

The tangential impact mechanism is described above with the use of V shape grooves 126. The use of V shaped grooves 126 allows the tangential impact mechanism to operate when the spindle is rotated in either direction as is well known in the art. If it is desired that the tangential impact mechanism should only operate in one direction of rotation, then only a single spiral groove angled in the appropriate direction is required.

A second embodiment of the present invention will now be described with reference to Figure 8 which shows a planetary gear system with a torque clutch 500 connected between and supported by a ring gear 70 and sun gear 502 which is provided as a single stand alone component, with the torque clutch 500 completely contained within the planetary gear system. Where the same features are shown in the second embodiment which were present in the first embodiment, the same reference numbers have been used.

The planetary gear system comprises a ring gear 70 in the form of a cup shaped gear in which is housed the planetary gears 94, the sun gear 502 and a torque clutch 500. The planetary gear system has an input gear 504 which can be rotationally driven by external rotary drive eg an electric motor of a power tool (or other type of machinery). The input gear 504 is directly connected to the sun gear 502 via a shaft 506 which is supported by bearings 510 on the ring gear 70. The input gear 504, shaft 506, and sun gear 502 can freely rotate in unison relative to the ring gear 70. The planetary gears 94 are located between and mesh with the ring gear 70 and the sun gear 502. The planetary gears 94 are rotationally mounted on pins 92 which are attached to a carrier 84. The carrier 84 is sandwiched between the end of the sun gear 502 and a plate 508 attached to the ring gear 70 and is prevented from axially moving relative to the ring gear 70. The carrier 84 can freely rotate relative to the ring gear 70. An output gear 512 is rigidly attached to the carrier 84. The planetary gear system comprising the sun gear 502, the planetary gears 94 and the ring gear 70 function in the normal well known manner, with a rotary drive being applied to the input gear 504 to rotationally drive the out gear 512 and/or ring gear 70 via the planetary gear system.

Rigidly mounted on the shaft 506 is a radial flange 514. Sandwiched between the radial flange 514 and the ring gear 70 is a torque clutch 500. The torque clutch slips when a torque greater than a predetermined value is applied across the torque clutch. Designs of torque clutch are well known in the art and therefore the specific design will not be discussed in detail. Any suitable type of torque clutch can be utilised. For example, the design of the torque clutch described in the first embodiment could be used.

When a rotary drive is applied to the input gear 504 to rotationally drive the out gear 512 via the planetary gear system and the torque across the torque clutch is below the predetermined value, the torque clutch does not slip resulting in the ring gear 70 and sun gear rotating in unison, the output gear 512 rotating at the same rate as the input gear 504. When a rotary drive is applied to the input gear 504 to rotationally drive the out gear 512 via the planetary gear system and the torque across the torque clutch is above the predetermined value (for example when the output gear 512 is prevented from rotating), the torque clutch slips, resulting in the ring gear 70 rotating at a different rate and direction to the input gear 504.

The rotational movement of the ring gear 70 can be transferred to another component via an external gear 516. The ring gear 70 is mounted within a frame 518 via a bearing 520 which allows the ring gear 70 to rotate within the frame 518. The frame 518 can be attached to a power tool (or other type of machinery) via fixings 522.

## Claims

1. A planetary gear system comprising:
a sun gear (78) forming a first part;
a ring gear (70) co-axial with the sun gear (78) forming a second part;
at least one planetary gear (94) which meshes with both the sun gear (78) and the ring gear (70) forming a third part;
a planetary gear carrier (84) which rotationally supports the at least one planetary gear (94) forming a fourth part;
wherein the there is provided a torque clutch which is supported by and connects directly between two of the parts;
wherein the torque clutch prevents relative rotation of the two parts below a predetermine torque value and allows relative rotation of the two parts above the predetermined value.

2. A planetary gear system in accordance with claim 1 wherein the torque clutch connects between the sun gear and the ring gear.

3. A planetary gear system is accordance with either of claims 1 or 2 wherein the torque clutch comprises:
a ball bearing cage non rotatably fixed onto one of the sun gear or ring gear;
a plurality of ball bearings mounted within the ball bearing cage and whose position ware fixed within the ball bearing cage;
a path formed on the other of the sun gear or ring gear along which the ball bearings are capable of travelling having indentations which correspond to the number and positions of the ball bearings and biasing means for urging the ball bearings (108) into the path or the indentations when the ball bearings are aligned with the indentations (114).
